# EUROPEAN PATENT APPLICATION

(11) **EP 1 091 474 A2**
(43) Date of publication of application: **11.04.2001**
(21) Application number: 00120255.5
(22) Date of filing: 27.09.2000
(51) Int. Cl.: H02K 16/02

(54) **Motor with bipolar permanent magnet rotor, allowing easier starting**

(30) Priority: 06.10.1999 IT MI992091
(71) Applicant: SICCE S.p.A., 36061 Bassano del Grappa (Vicenza) (IT)
(72) Inventor: Pettenon, Paolo, 35013 Cittadella (Padova) (IT)
(74) Representative: Modiano, Guido, Dr.-Ing.

(57) **Abstract**

A motor with bipolar permanent magnet rotor allowing easier starting, comprising a first bipolar magnet rotor (2) and at least one second bipolar permanent magnet rotor (3), which are associated with a same shaft (4) and are electromagnetically interconnected to a respective stator (5,6). The angle formed between the magnetic axis of one rotor (2) and the axis of the stator magnetic field of the corresponding stator (5) is different from the angle between the magnetic axis of the other rotor (3) and the axis of the stator magnetic field of the other stator (6).

## Description

The present invention relates to a motor with bipolar permanent magnet rotor which allows easier starting.

Conventional rotors with bipolar permanent magnets usually have cylindrical bipolar magnets which, in order to be started, require the use of asymmetrical pole shoes which allow to obtain an angle of approximately 5-8° between the magnetic axis of the rotor and the directrix of the stator magnetic field.

The presence of a reduced angle sometimes creates difficulties in starting.

Moreover, during rotation the torque varies continuously, with peaks of thrust of the bipolar rotor which can be relatively high, leading to increases in consumption.

Another drawback suffered by the prior art is that there are specific technological limits to the axial dimension of the magnets and therefore it is not possible to have high-power motors.

The aim of the invention is to eliminate these drawbacks, by providing a motor with bipolar permanent magnet rotor allowing easier starting in which it is possible to achieve a very high starting torque, and to provide an initial torque lever arm which is far greater than the torque lever arm obtained by means of the asymmetry of the pole shoes of the solutions of the prior art.

Within the scope of this aim, an object of the present invention is to provide a motor which has a much more uniform torque over the 360° of its rotation, and in practice fractionizes the thrust peaks, with a consequent quieter and more uniform operation of the motor.

Another object of the present invention is to provide a motor which allows to reduce the gap, with a consequent increase in power output and a reduction in consumption, since the instantaneous peaks of absorbed current are reduced considerably.

Another object of the present invention is to provide a motor which allows reversible right-handed and left-handed rotation. It is also an object to obtain more powerful motors.

These and other objects which will become better apparent hereinafter are achieved by a motor with bipolar permanent magnet rotor allowing easier starting, according to the invention, characterized in that it comprises a first bipolar magnet rotor and at least one second bipolar magnet rotor, which are associated with a same shaft and are electromagnetically interconnected to a respective stator, the angle formed between the magnetic axis of one rotor and the axis of the stator magnetic field of the corresponding stator being different from the angle between the magnetic axis of the other rotor and the axis of the stator magnetic field of the other stator.

Further characteristics and advantages will become better apparent from the following detailed description of a preferred but not exclusive embodiment of a motor with bipolar permanent magnet rotor allowing easier starting according to the present invention, illustrated only by way of non-limitative example in the accompanying drawings, wherein:
Figure 1 is a schematic view of the motor according to the invention, taken from the side of the pole shoes;
Figure 2 is an elevation view of the motor;
Figure 3 is a schematic view of the different arrangement of the rotors keyed on the same shaft;
Figure 4 is a schematic view of the motor provided with a sensor for actuation in a preset direction;
Figure 5 is a functional block diagram of the starting of the motor in a preset direction.

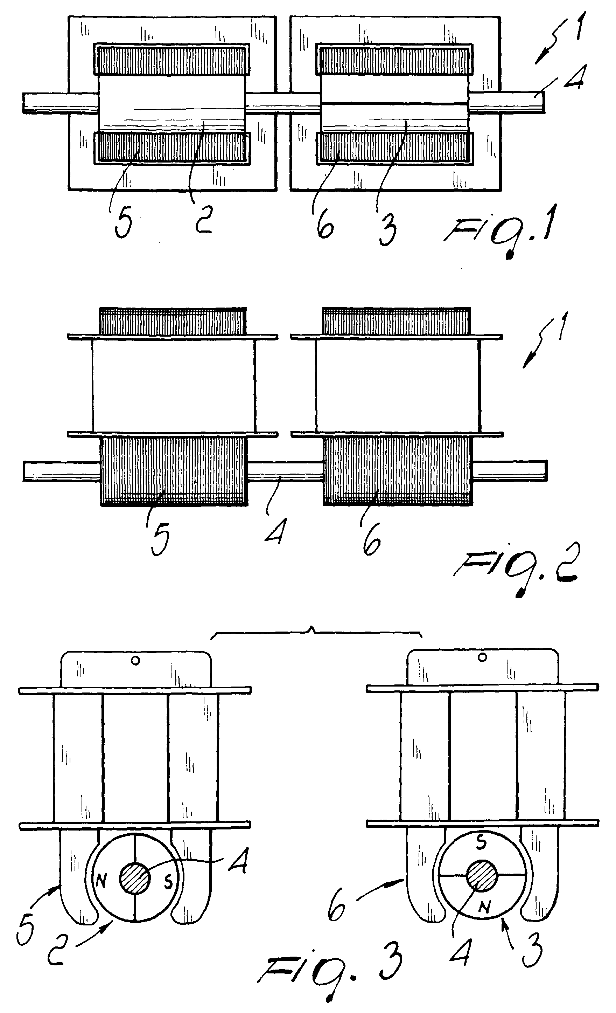

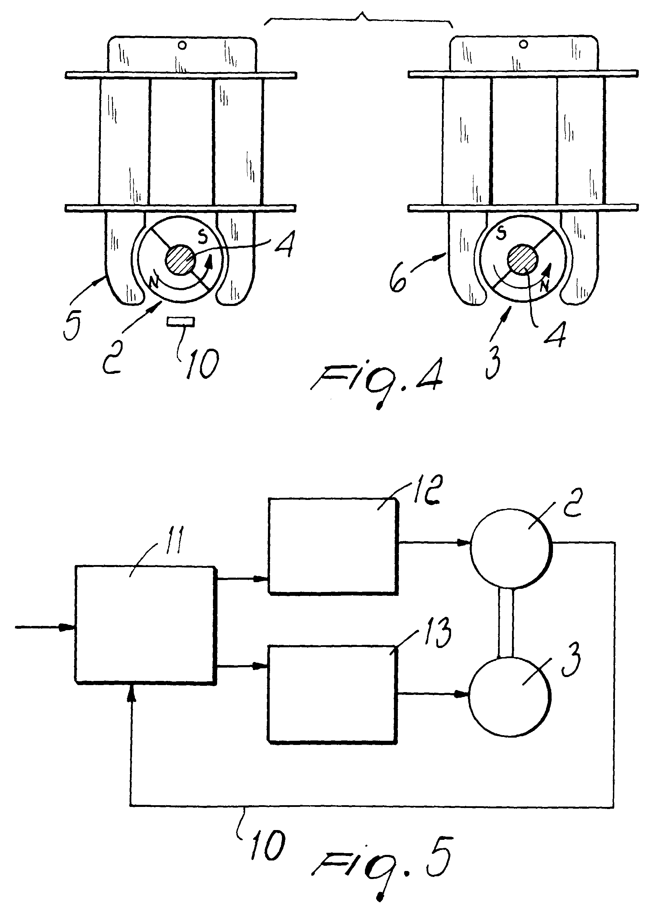

With reference to the figures, the motor with bipolar permanent magnet rotor allowing easier starting, according to the invention, generally designated by the reference numeral 1, comprises a first bipolar magnet rotor 2 and at least one second bipolar magnet rotor 3 which are keyed on the same shaft 4.

The rotors 2 and 3 are constituted by cylindrical bipolar permanent magnets which are coupled to the shaft 4 so that their magnetic axes are mutually offset by an angle which allow to obtain an initially relatively large torque lever arm.

Advantageously, the corresponding angle measures 90°, but it is obviously also possible to achieve optimum results with different angles; moreover, it is noted that the rotors might be arranged on separate shafts which however operatively rotate jointly with respect to each other, in the sense that the mutual angular arrangement of the rotors is not changed even during rotation.

The corresponding rotors 2 and 3 are arranged at respective stators 5 and 6 which need not have asymmetric pole shoes, as normally occurs.

It should also be observed that it is conceptually possible to arrange the two rotors with the same orientation of the magnetic axis and to achieve the offset in the stator magnetic field, since for the operation of the motor according to the invention it is important that the angle formed between the magnetic axis of one rotor and the axis of the stator magnetic field of the corresponding stator, be different from the angle formed between the magnetic axis of the other rotor and the axis of the stator magnetic field of the other stator; accordingly, this angle variation can be achieved by offsetting the rotors, by offsetting the stator windings or by phase shifting their electric power supply.

With the described arrangement, it is also possible to achieve rotation of the motor in one direction and in the opposite direction; for this purpose it is sufficient to provide, at one of the rotors, a magnetic sensor, for example a Hall sensor 10, which drives a stator synchronization unit 11 which acts on a control 12 and a control 13 of the coils of the two stators arranged at the corresponding rotors.

By using a magnetic offset between the two rotors, no point of the 360° of the rotation angle can have zero torque or can be in a position of possible equilibrium and therefore in a motor stalling position.

The torque is much more uniform over the 360° of rotation, eliminating the thrust peaks that are typical of bipolar permanent magnets, which are fractionized and reduced, so that it is also possible to achieve a consequent reduction in consumption.

Another important aspect further consists in that by mutually coupling a plurality of rotors it is possible to obtain more powerful motors, thus exceeding the technological limitations that are typical of rotors with bipolar permanent magnets.

From the above description it is evident that the present invention achieves the intended aim and objects, and that a motor with bipolar permanent magnet rotor is provided which completely overcomes the typical limitations of these motors.

The invention thus conceived is susceptible of numerous modifications and variations, all of which are within the scope of the inventive concept.

All the details may further be replaced with other technically equivalent elements.

In practice, the materials used, as well as the dimensions and the contingent shapes, may be any according to requirements.

The disclosures in Italian Patent Application No. MI99A002091 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A motor with bipolar permanent magnet rotor for easier starting, characterized in that it comprises a first bipolar magnet rotor (2) and at least one second bipolar magnet rotor (3), which are associated with a same shaft (4) and are electromagnetically interconnected to a respective stator (5,6), the angle formed between the magnetic axis of one rotor (2) and the axis of the stator magnetic field of the corresponding stator (5) being different from the angle between the magnetic axis of the other rotor (3) and the axis of the stator magnetic field of the other stator (6).

2. The motor according to claim 1, characterized in that said first (2) and second (3) bipolar permanent magnet rotors have mutually offset respective magnetic axes.

3. The motor according to the preceding claims, characterized in that said bipolar permanent magnet rotors (2,3) are offset by substantially 90°.

4. The motor according to one or more of the preceding claims, characterized in that it comprises a first rotor (2) and a second rotor (3) with mutually coinciding magnetic axes which interact with respective stators (5,6) whose stator magnetic field axes are mutually offset.

5. The motor according to one or more of the preceding claims, characterized in that it comprises a magnetic sensor (10) which detects the position of one of said rotors (2,3) and drives an electronic synchronization unit (11) which controls the stator coils.
